# EUROPÄISCHE PATENTSCHRIFT

(11) **EP 2 994 357 B1**
(45) Veröffentlichungstag und Bekanntmachung des Hinweises auf die Patenterteilung: **02.01.2019**
(21) Anmeldenummer: 14720552.0
(22) Anmeldetag: 23.04.2014
(51) Int. Cl.: B60K 6/22, B60W 20/11, B60W 10/06, B60W 50/08, B60W 10/08, B60W 50/00, B60K 6/48

(54) **VERFAHREN ZUR BESTIMMUNG EINES KONTROLLPARAMETERS EINES LEISTUNGS- ODER DREHMOMENTVERTEILUNGSREGLERS FÜR EINEN HYBRIDANTRIEB EINER ARBEITSMASCHINE**
METHOD FOR DETERMINING A CONTROL PARAMETER OF A POWER OR TORQUE DISTRIBUTION CONTROLLER FOR A HYBRID DRIVE OF A WORK MACHINE
PROCÉDÉ PERMETTANT DE DÉTERMINER UN PARAMÈTRE DE CONTRÔLE D'UN RÉGULATEUR DE PUISSANCE OU DE RÉPARTITION DE COUPLE POUR UN ENTRAÎNEMENT HYBRIDE D'UN ENGIN DE TRAVAIL

(30) Priorität: 07.05.2013 DE 102013208320
(43) Veröffentlichungstag der Anmeldung: 16.03.2016
(73) Patentinhaber: Deere & Company, Moline, IL 61265 (US)
(72) Erfinder: FLÖRCHINGER, Thomas, 68165 Mannheim (DE); MÜNCH, Philipp, 67663 Kaiserslautern (DE); REINMUTH, Florian, 74889 Sinsheim (DE); BÖHM, Barbara, 69115 Heidelberg (DE)
(74) Vertreter: Holst, Sönke
(86) Internationale Anmeldenummer: PCT/EP2014/058216
(87) Internationale Veröffentlichungsnummer: WO 2014/180659

(56) Entgegenhaltungen:
- EP-A2- 1 832 484
- WO-A1-2008/140359
- DE-A1-102011 118 543
- US-A1- 2004 128 058

## Beschreibung

Die Erfindung betrifft ein Verfahren zur Bestimmung eines Kontrollparameters eines Leistungs- oder Drehmomentverteilungsreglers für einen Hybridantrieb einer Arbeitsmaschine und eine entsprechende Steuereinrichtung.

### Stand der Technik

Hybride Antriebe für Arbeitsmaschinen umfassen einen Verbrennungsmotor, einen vom Verbrennungsmotor angetriebenen Generator, einen Ladungsspeicher und einen Elektromotor. Der Vortrieb der Arbeitsmaschine und/oder der Antrieb von durch die Arbeitsmaschine angetriebenen Komponenten erfolgt durch einen Antriebsstrang, in dem die Antriebsmomente des Verbrennungsmotors und des Elektromotors durch ein Summierungsgetriebe, in der Regel ein Planetengetriebe, überlagert werden oder gemeinsam auf eine Welle einwirken. Durch die Aufteilung der Antriebsleistung in die vom Verbrennungsmotor bereitgestellte Leistung und die vom Ladungsspeicher bereitgestellte Leistung stellen derartige hybride Antriebe einen weiteren Freiheitsgrad gegenüber konventionellen Antrieben bereit, bei denen nur die Leistung des Verbrennungsmotors veränderbar ist. Zur Vorgabe des Drehmoments des Verbrennungsmotors und des Drehmoments des Elektromotors bzw. zur Aufteilung einer bereitzustellenden Leistung auf den Verbrennungsmotor und den Elektromotor werden im Stand der Technik verschiedene Typen von Reglern verwendet, insbesondere Proportional-Integral-Regler (s. DE 10 2006 010 223 A1), oder heuristische Regler.

Derartige, so genannte Leistungs- oder Drehmomentverteilungsregler müssen weitere Randbedingungen beachten, wie eine Aufrechterhaltung einer bestimmten Ladung im Ladungsspeicher, und sind im Sinne einer Optimierung des Gesamtwirkungsgrades zu optimieren. Da eine Vorausschau des zukünftigen Leistungsbedarfs der Arbeitsmaschine, welcher für eine alle Umstände berücksichtigenden, optimalen Regler erforderlich wäre, nicht möglich ist, werden Kontrollparameter der - als suboptimale Regler bezeichneten - Regler derart vorgegeben, dass sie bei einem vorbestimmten Zyklus für den Leistungsbedarf möglichst wirkungsgradoptimal arbeiten. Bei einem Proportional-Integral-Regler werden demnach beispielsweise die Faktoren, mit denen der Leistungsbedarf proportional und integral in den Ausgabewert für die Aufteilung einer bereitzustellenden Leistung auf den Verbrennungsmotor und den Elektromotor eingeht, für den vorbestimmten Zyklus optimiert.

Da Arbeitsmaschinen üblicherweise im Rahmen der durchzuführenden Tätigkeiten unterschiedliche Arbeitszyklen durchlaufen, - so ist beispielsweise die Belastung beim Düngerausbringen relativ gering, beim Ballenpressen zyklisch zwischen relativ niedriger und hoher Belastung wechselnd und beim Pflügen relativ hoch - ist die Anpassung der Kontrollparameter des Reglers nicht für alle Arbeitszustände optimal.

Die EP 1 832 484 A2 beschreibt ein Verfahren zur adaptiven Kontrolle eines Hybridfahrzeugs, dessen Verbrennungsmotor einen Generator antreibt, welcher wiederum einen Ladungsspeicher und einen Elektromotor versorgt, der allein zum Vortrieb des Fahrzeugs dient. Eine Steuerung vergleicht einen Arbeitsvorgang mit einem abgespeicherten Referenzarbeitsvorgang, um zu bestimmen, in welcher Lastkategorie das Hybridfahrzeug betrieben wird und wählt eine Stromkontrollkurve und eine Stromanstiegskurve für den Betrieb des Elektromotors abhängig von der jeweiligen Lastkategorie aus. Der Bediener kann zusätzlich eingeben, welche Aufgabe gerade zu bewältigen ist und die Steuerung wählt die jeweilige Lastkategorie abhängig von der Aufgabe aus. Hier ist demnach einerseits eine manuelle Eingabe für den jeweiligen Zyklus erforderlich und andererseits wird lediglich die Stromaufnahme des Elektromotors gesteuert; es erfolgt somit keine Anpassung der Kontrollparameter eines Reglers.

Die WO 2008/140359 A1 beschreibt eine Arbeitsmaschine, bei welcher die Einspeisung und Entnahme von Energie aus einem Speicher von einer vorbestimmten Kontrollstrategie abhängt, die an die Eigenschaften des jeweiligen Arbeitszyklus angepasst ist.

### Aufgabe der Erfindung

Die der Erfindung zu Grunde liegende Aufgabe wird darin gesehen, ein Verfahren zur Bestimmung eines Kontrollparameters eines Leistungs- oder Drehmomentverteilungsreglers für einen Hybridantrieb einer Arbeitsmaschine und einen entsprechenden Leistungs- oder Drehmomentverteilungsregler dahingehend weiterzubilden, dass die erwähnten Nachteile des Standes der Technik nicht oder in einem verminderten Maße auftreten.

### Lösung

Diese Aufgabe wird erfindungsgemäß durch die Lehre der Patentansprüche 1, 5 und 8 gelöst, wobei in den weiteren Patentansprüchen Merkmale aufgeführt sind, die die Lösung in vorteilhafter Weise weiterentwickeln.

Ein erfindungsgemäßes Verfahren zur Bestimmung eines Kontrollparameters eines Leistungs- oder Drehmomentverteilungsreglers für einen Hybridantrieb einer Arbeitsmaschine umfasst folgende Schritte:
(a) selbsttätiges Bestimmen eines gerade von der Arbeitsmaschine durchgeführten Arbeitszyklus, und
(b) Auswählen des Kontrollparameters abhängig vom im Schritt (a) bestimmten Arbeitszyklus.

Mit anderen Worten wird zunächst bestimmt, in welchem Arbeitszyklus sich die Arbeitsmaschine gerade befindet. Hierzu findet beispielsweise eine Klassifizierung von sensorisch erfassten Messwerten anhand einer Mustererkennung durch einen Klasssifikationsalgorithmus statt. Der Klassifikationsalgorithmus kann an sich bekannte Vorgehensweisen, z.B. einen Bayes-Klassifikator und/oder einen Nearest-Neighbour-Klassifikator und/oder einen k-Nearest-Neighbour-Klassifikator und/oder Distanzfunktionen und/oder Entscheidungsbäume verwenden. Die Messwerte betreffen insbesondere die Geschwindigkeit und/oder eine Übersetzungsstufe eines Schaltgetriebes und/oder den Zustand einer Zapfwelle und/oder über einen Datenbus übertragene Daten. Sobald der aktuelle Arbeitszyklus bekannt ist, wird der diesem Arbeitszyklus zugeordnete, mindestens eine Kontrollparameter ausgewählt und vom Leistungs- oder Drehmomentverteilungsregler zur Bestimmung der Aufteilung einer bereitzustellenden Leistung (bzw. Drehmoment) auf den Verbrennungsmotor und den Elektromotor verwendet. Durch das Ändern der Kontrollparameter wird das dynamische Verhalten des Leistungs- oder Drehmomentverteilungsreglers entscheidend verbessert.

Der Kontrollparameter ist ein Faktor, mit dem der jeweilige Drehmoment- oder Leistungsbedarf proportional und/oder integral in den Ausgabewert des als Proportional-Integral-Regler ausgeführten Leistungs- oder Drehmomentverteilungsreglers eingeht.

Die Arbeitsmaschine, in welcher der Leistungs- oder Drehmomentverteilungsregler verwendet wird, ist vorzugsweise mit einem Verbrennungsmotor, einem vom Verbrennungsmotor antreibbaren Generator, einem Ladungsspeicher, einem Elektromotor und einem ein mit dem Verbrennungsmotor und dem Elektromotor in Antriebsverbindung stehenden Summierungsgetriebe umfassenden Antriebsstrang ausgestattet.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer landwirtschaftlichen Arbeitsmaschine in Form eines Traktors mit einer gezogenen Ballenpresse,
- Fig. 2: ein Schema des Antriebsstrangs der Arbeitsmaschine und der zugehörigen Steuerung, und
- Fig. 3: ein Flussdiagramm, nach dem die Steuerung arbeitet.

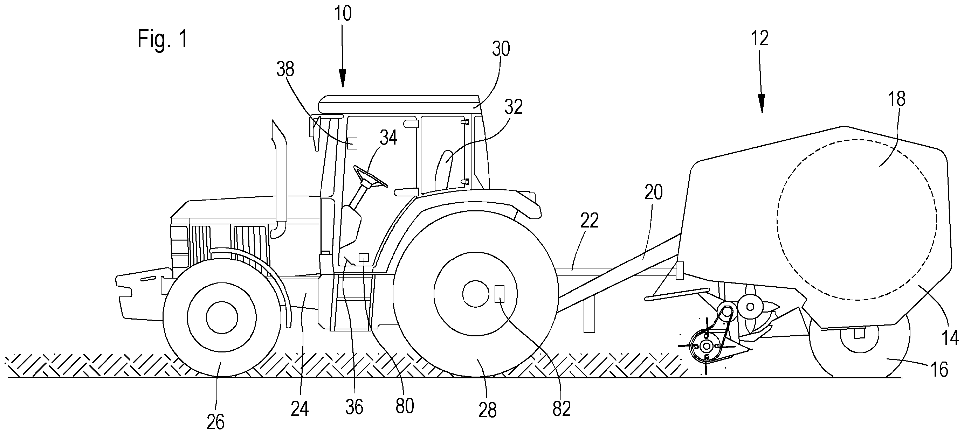

Die Figur 1 zeigt eine landwirtschaftliche Arbeitsmaschine in Form eines Traktors 10 und einer vom Traktor 10 gezogenen Rundballenpresse 12. Die Rundballenpresse 12 ist an sich konventionell und umfasst ein auf Rädern 16 abgestütztes Fahrgestell 14 mit einer Ballenbildungskammer 18. Die Rundballenpresse 12 wird durch eine Deichsel 20 vom Traktor 10 gezogen und ihre antreibbaren Elemente werden mittels einer Zapfwelle 22 vom Traktor 10 her angetrieben. Der Traktor 10 umfasst ein Fahrgestell 24, das sich auf vorderen, lenkbaren Rädern 26 und rückwärtigen, angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerschnittstelle 38 mit einer Anzeigeeinrichtung und Tasten und/oder der berührungsempfindlichen Anzeigeeinrichtung betätigbar.

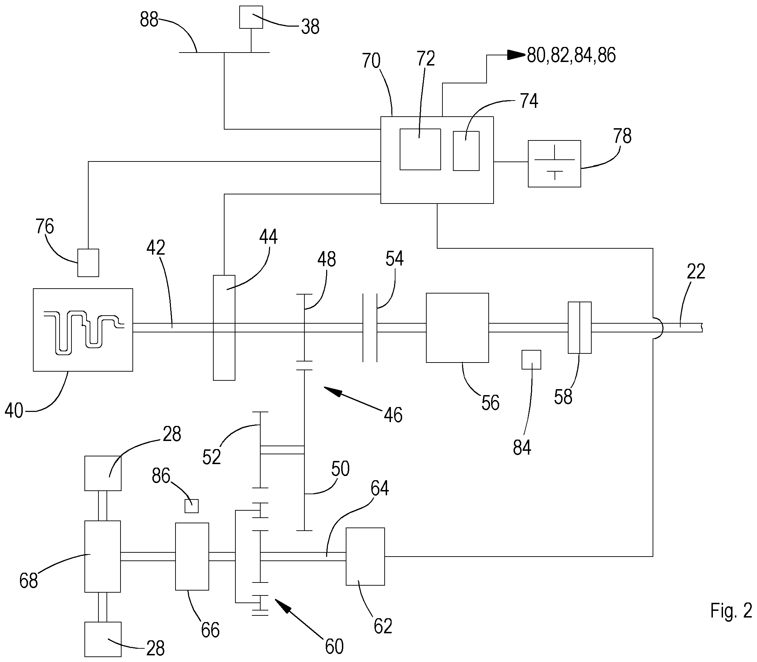

Die Figur 2 zeigt den Antriebsstrang der Arbeitsmaschine. Die Kurbelwelle eines in der Regel als Dieselmotor ausgeführten Verbrennungsmotors 40 treibt (in der Regel über eine trennbare Kupplung, nicht eingezeichnet) eine Welle 42 an, die ihrerseits einen elektrischen Generator 44, ein Zwischengetriebe 46 mit Zahnrädern 48, 50 und 52 sowie die Eingangsseite einer Zapfwellentrennkupplung 54 antreibt. Die Zapfwellentrennkupplung 54 ist ausgangsseitig mit dem Eingang eines Zapfwellengetriebes 56 verbunden, das ausgangsseitig eine trennbare Zapfwellenkupplung 58 antreibt, an welcher die Zapfwelle 22 der Rundballenpresse 12 abnehmbar angekoppelt ist. Das Zwischengetriebe 46 ist ausgangsseitig mit einem Summiergetriebe 60 verbunden, das in Form eines Planetengetriebes realisiert ist, dessen Ringrad mit dem Ausgangszahnrad 52 des Zwischengetriebes 52 kämmt und dessen Sonnenrad mit der Ausgangswelle 64 eines Elektromotors 62 verbunden sind. Der Planetenradträger ist mit der Eingangsseite eines Schaltgetriebes 66 gekoppelt, das ausgangsseitig über ein Differenzialgetriebe 68 die hinteren Räder 28 antreibt.

Bei einer anderen Ausführungsform kann das Zapfwellengetriebe 56 auch stromab des Summiergetriebes 60 angetrieben werden. Außerdem kann das Schaltgetriebe 66 als Lastschaltgetriebe ausgeführt sein. Bei noch einer anderen Ausführungsform können Summiergetriebe 60 den einzelnen Rädern 28 und ggf. auch den vorderen Rädern 26 zugeordnet werden. Bei einer weiteren Ausführungsform könnte der Elektromotor 62 sein Drehmoment direkt oder über ein Getriebe auf die Welle 42 oder eine andere Stelle des Antriebsstrang übertragen, d.h. das Summiergetriebe 60 könnte dann entfallen und der Elektromotor 62 könnte die Aufgaben des Generators 44 mit übernehmen. Bei noch einer anderen Ausführungsform könnte die gesamte mechanische Leistung durch den Elektromotor 62 erzeugt werden, wobei dann die maximalen Leistungen des Generators 44 und des Elektromotors 62 zu vergrößern wären, da der mechanische Antriebszweig entfällt.

Eine Steuereinrichtung 70 umfasst einen Leistungs- oder Drehmomentverteilungsregler 72 und eine Zustandserfassungseinrichtung 74 und ist elektrisch mit dem Generator 44, einer Verbrennungsmotorsteuerung 76, einem Ladungsspeicher 78 in Form eines Akkumulators (oder hochkapazitiven Kondensators o.dgl.) und dem Elektromotor 62 verbunden. Weiterhin ist die Steuereinrichtung 70 mit einem Sensor 80 zur Erfassung der Stellung des Gaspedals 36, einem Geschwindigkeitssensor 82 zur Erfassung der Drehzahl eines oder beiden der hinteren Räder 28, einem Sensor zur Erfassung der Drehzahl der Eingangsseite der Zapfwellenkupplung 58, einem Sensor 86 zur Erfassung der Übersetzungsstufe des Schaltgetriebes 66 und einem Datenbus 88 gekoppelt, an dem u.a. die als virtuelles Terminal realisierte Bedienerschnittstelle 38 angeschlossen ist.

Im Betrieb gibt der Bediener über das Gaspedal 36 eine gewünschte Geschwindigkeit des Traktors 12 vor, die über den Sensor 80 an die Steuereinrichtung 70 übermittelt wird, welche die Verbrennungsmotorsteuerung 76 und den Elektromotor 62 abhängig von Signalen des Leistungs- oder Drehmomentverteilungsreglers 72 ansteuert. Abhängig von den Vorgaben des Leistungs- oder Drehmomentverteilungsreglers 72 entnimmt die Steuereinrichtung 70 elektrische Leistung aus dem Ladungsspeicher 78, um den Elektromotor 62 anzutreiben oder lädt den Ladungsspeicher 78 mit elektrischer Leistung aus dem Generator 44 oder vom Elektromotor 62 rekuperierter EMK auf. Das Schaltgetriebe 66 kann manuell durch den Bediener über einen Hebelmechanismus oder selbsttätig durch die Steuereinrichtung 70 oder über die Bedienerschnittstelle 38 und einen von der Steuereinrichtung 70 kontrollierten Aktor (nicht gezeigt) geschaltet werden. Auch die Zapfwellentrennkupplung 54 kann über eine Mechanik vom Bediener oder über die Bedienerschnittstelle 38 oder einen separaten Schalter und einen von der Steuereinrichtung 70 kontrollierten Aktor (nicht gezeigt) geschaltet werden.

Zu Details zum Aufbau und zur Wirkungsweise des Leistungs- oder Drehmomentverteilungsreglers 72 sei auf die Veröffentlichungen von Michiel Koot, J. T. B. A. Kessels, Bram de Jager, W. P. M. H. Heemels, P. P. J. van den Bosch, and Maarten Steinbuch: Energy management strategies for vehicular electric power systems, IEEE Transactions on Vehicular Technology, 54(3):771-782, 2005, und John T. B. A. Kessels, Michiel W. T. Koot, Paul P. J. van den Bosch, and Daniel B. Kok: Online energy management for hybrid electric vehicles, IEEE Transactions on Vehicular Technology, 57(6):3428-3440, 2008 verwiesen.

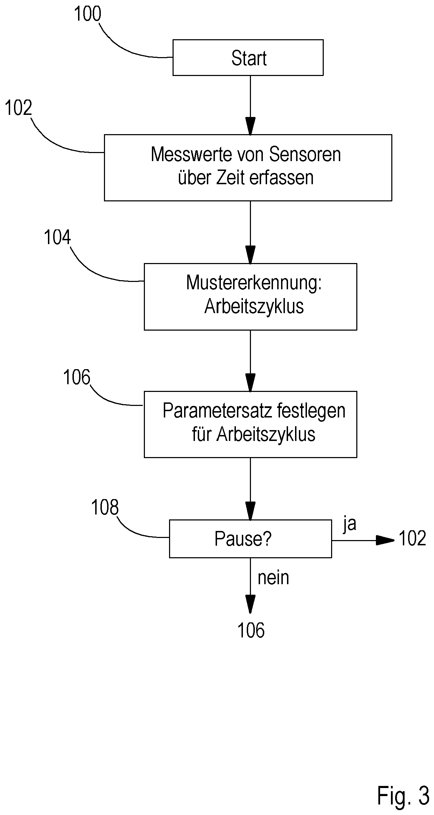

Der Leistungs- oder Drehmomentverteilungsregler 72 ist als Proportional-Integral-Regler ausgeführt und nutzt Kontrollparameter, die von der jeweils durchgeführten Tätigkeit der Arbeitsmaschine abhängen. Dabei wird nach dem Flussdiagramm der Figur 3 vorgegangen.

Nach dem Start im Schritt 100, in dem eine Initialisierung stattfindet, folgt der Schritt 102, in dem durch die Zustandserfassungseinrichtung 74 Messwerte von Sensoren über eine bestimmte Zeit erfasst und abgespeichert werden. Hierbei handelt es sich um Messwerte von den Sensoren 80 (für das Gaspedal 36), 82 (für die Geschwindigkeit des Traktors 10), 84 (für den Drehzustand der Zapfwellenkupplung 58) und 86 (für die Übersetzungsstufe des Schaltgetriebes 66). Weiterhin können beliebige Daten vom Datenbus 88 erfasst werden, die beispielsweise eine Identifikation eines evtl. an den Datenbus 88 angeschlossenen Zusatzgeräts (z.B. Düngerstreuer, Pflug oder Ballenpresse etc.) und/oder Daten zur Ansteuerung des Zusatzgeräts beinhalten können.

Im Schritt 104 werden die abgespeicherten Messwerte durch die Zustandserfassungseinrichtung 74 ausgewertet, um ein Muster zu erkennen, aus dem sich der aktuelle Arbeitszyklus der Arbeitsmaschine ableiten lässt. Hierfür können beliebige Algorithmen verwendet werden, wie ein Bayes-Klassifikator, ein Nearest-Neighbour-Klassifikator, ein k-Nearest-Neighbour-Klassifikator, Distanzfunktionen und/oder Entscheidungsbäume. Hierzu sei beispielsweise auf die Offenbarung der DE 10 2012 220 109 A1 und den dort zitierten Stand der Technik verwiesen (Sebastian Blank, Georg Kormann, Karsten Berns: A Modular Sensor Fusion Approach for Agricultural Machines, XXXVI CIOSTA & CIGR Section V Conference, Juni 2011 - Wien, veröffentlicht unter http://www.nas.boku.ac.at/fileadmin/ /H93/H931/CIOSTA Presentations/Blank.pdf), die durch Verweis mit in die vorliegenden Unterlagen aufgenommen werden. Der aktuelle Arbeitszyklus wird demnach unter mehreren bekannten Arbeitszyklen ausgewählt.

Beispielsweise wird der Arbeitszyklus der Arbeitsmaschine "Transportfahrt" sein, wenn sich das Schaltgetriebe 66 (erfasst mit dem Sensor 86) in einer höheren Übersetzungsstufe befindet und die Geschwindigkeit (erfasst mit dem Sensor 82) über einem Schwellenwert von z.B. 15 km/h liegt. Analog wird der Arbeitszyklus der Arbeitsmaschine "Bodenbearbeitung" sein, wenn die Geschwindigkeit unter einem Schwellenwert von z.B. 5 km/h liegt und die (mittels der Verbrennungsmotorsteuerung 76 an die Zustandserfassungseinrichtung 74 übermittelte) Leistung des Verbrennungsmotors 40 über einem Schwellenwert von z.B. 60 % seiner Nennleistung liegt. Ein Arbeitszyklus "Ballenpressen" kann anhand häufig wechselnder Belastungen des Verbrennungsmotors 40 oder anhand einer Identifikation einer Ballenpresse über den Datenbus 88 in Verbindung mit dem Zustand der Zapfwellenkupplung 58 (Sensor 84) erkannt werden. Ein Arbeitszyklus "Laderarbeiten" kann anhand einer Ansteuerung eines Frontladers über den Datenbus 88 oder häufige Richtungswechsel (Sensor 82) erkannt werden.
Es folgt dann der Schritt 106, in welchem die Zustandserfassungseinrichtung 74 dem Leistungs- oder Drehmomentverteilungsregler 72 ein Signal hinsichtlich des derzeitigen Arbeitszyklus übermittelt und der Leistungs- oder Drehmomentverteilungsregler 72 einen dem Arbeitszyklus zugeordneten Parametersatz für die Regelung der Lastverteilung auf den Verbrennungsmotor 40 und den Elektromotor 62 verwendet. Dieser Parametersatz kann einen Faktor umfassen, mit dem der jeweils aktuelle (der Steuereinrichtung 70 z.B. anhand der mit dem Sensor 80 erfassten Stellung des Gaspedals 36 und der ihr bekannten Leistungswerte des Verbrennungsmotors 40, des Generators 44 und des Elektromotors 62 bekannte) Leistungsbedarf proportional in den Ausgabewert für die Regelung der Drehmoment- oder Lastverteilung auf den Verbrennungsmotor 40 und den Elektromotor 62 des als Proportional-Integral-Regler ausgeführten Leistungs- oder Drehmomentverteilungsreglers 72 eingeht. Auch kann der Parametersatz einen Faktor umfassen, mit dem der jeweilige Drehmoment- oder Leistungsbedarf integral in den Ausgabewert des als Proportional-Integral-Regler ausgeführten Leistungs- oder Drehmomentverteilungsreglers 72 eingeht. Dadurch erreicht man, dass bei einem Arbeitszyklus "Transportfahrt" die Lastwechselvorgänge langsamer ablaufen als beispielsweise bei einem Arbeitszyklus "Ballenpressen". Der Parametersatz könnte auch durch die Zustandserfassungseinrichtung 74 oder einen anderen Teil der Steuereinrichtung 70 ausgewählt werden.

Während der Schritte 102 bis 106, d.h. solange der aktuelle Arbeitszyklus noch nicht bekannt ist, arbeitet der Leistungs- oder Drehmomentverteilungsregler 72 mit einem vorgegebenen Standard parametersatz.

Es folgt der Schritt 108, in dem geprüft wird, ob die Arbeitsmaschine gerade eine längere Pause (z.B. von mehr als 30 s) hatte. Eine derartige Pause deutet auf einen möglichen Wechsel des Arbeitszyklus hin. Ist das nicht der Fall, wird wieder mit dem Schritt 106 fortgefahren, d.h. der bisherige Arbeitszyklus und der zugehörigen Parametersatz weiterverwendet, und anderenfalls folgt wieder der Schritt 102, um den Arbeitszyklus neu zu bestimmen.

## Patentansprüche

1. Verfahren zur Bestimmung eines Kontrollparameters eines Leistungs- oder Drehmomentverteilungsreglers (72) für einen Hybridantrieb einer Arbeitsmaschine, mit folgenden Schritten:
(a) selbsttätiges Bestimmen eines gerade von der Arbeitsmaschine durchgeführten Arbeitszyklus, und
(b) Auswählen des Kontrollparameters abhängig vom im Schritt (a) bestimmten Arbeitszyklus,
**dadurch gekennzeichnet, dass** der Kontrollparameter ein Faktor ist, mit dem der jeweilige Drehmoment- oder Leistungsbedarf proportional und/oder integral in den Ausgabewert des als Proportional-Integral-Regler ausgeführten Leistungs- oder Drehmomentverteilungsreglers (72) eingeht.

2. Verfahren nach Anspruch 1, wobei im Schritt (a) der Arbeitszyklus anhand einer Klassifizierung von sensorisch erfassten Messwerten anhand einer Mustererkennung durch einen Klasssifikationsalgorithmus bestimmt wird.

3. Verfahren nach Anspruch 2, wobei der Klassifikationsalgorithmus einen Bayes-Klassifikator und/oder einen Nearest-Neighbour-Klassifikator und/oder einen k-Nearest-Neighbour-Klassifikator und/oder Distanzfunktionen und/oder Entscheidungsbäume verwendet.

4. Verfahren nach Anspruch 2 oder 3, wobei die Messwerte die Geschwindigkeit der Arbeitsmaschine und/oder eine Übersetzungsstufe eines Schaltgetriebes (66) und/oder den Zustand einer Zapfwelle (22) und/oder über einen Datenbus (88) übertragene Daten betreffen.

5. Steuereinrichtung (70) für einen Hybridantrieb einer Arbeitsmaschine, mit:
(a) einer Zustandserfassungseinrichtung (74) zum selbsttätigen Bestimmen eines gerade von der Arbeitsmaschine durchgeführten Arbeitszyklus, und
(b) Mitteln zum Auswählen eines Kontrollparameters eines Leistungs- oder Drehmomentverteilungsreglers (72) zur Regelung der Lastverteilung auf einen Verbrennungsmotor (40) und einen Elektromotor (62) des Hybridantriebs abhängig vom durch die Zustandserfassungseinrichtung (74) bestimmten Arbeitszyklus,
**dadurch gekennzeichnet, dass** der Kontrollparameter ein Faktor ist, mit dem der jeweilige Drehmoment- oder Leistungsbedarf proportional und/oder integral in den Ausgabewert des als Proportional-Integral-Regler ausgeführten Leistungs- oder Drehmomentverteilungsreglers (72) eingeht.

6. Steuereinrichtung (70) nach Anspruch 5, wobei die Zustandserfassungseinrichtung (74) betreibbar ist, den Arbeitszyklus anhand einer Klassifizierung von sensorisch erfassten Messwerten anhand einer Mustererkennung durch einen Klasssifikationsalgorithmus zu bestimmen.

7. Steuereinrichtung nach Anspruch 6, wobei die Messwerte die Geschwindigkeit der Arbeitsmaschine und/oder eine Übersetzungsstufe eines Schaltgetriebes (66) und/oder den Zustand einer Zapfwelle (22) und/oder über einen Datenbus (88) übertragene Daten betreffen.

8. Arbeitsmaschine mit einem Verbrennungsmotor (40), einem vom Verbrennungsmotor (40) antreibbaren Generator (44), einem Ladungsspeicher (78), einem Elektromotor (62), einem ein mit dem Verbrennungsmotor (40) und dem Elektromotor (62) in Antriebsverbindung stehendes Summierungsgetriebe (60) umfassenden Antriebsstrang und einer Steuereinrichtung (70) nach einem der Ansprüche 5 bis 7.

## Claims

1. Method for determining a control parameter of a power or torque distribution controller (72) for a hybrid drive of a work machine, having the following steps:
(a) automatic determination of a work cycle which is just carried out by the work machine, and
(b) selection of the control parameter as a function of the work cycle determined in the step (a),
**characterized in that** the control parameter is a factor of which the respective torque demand or power demand is input in a proportional and/or integral fashion into the output value of the power or torque distribution controller (72) which is embodied as a proportional integral controller.

2. Method according to Claim 1, wherein in the step (a) the work cycle is determined on the basis of a classification of measured values which are acquired by a sensor, on the basis of a pattern detection by means of a classification algorithm.

3. Method according to Claim 2, wherein the classification algorithm uses a Bayes classifier and/or a nearest-neighbour classifier and/or a k-nearest-neighbour classifier and/or distance functions and/or decision trees.

4. Method according to Claim 2 or 3, wherein the measured values relate to the speed of the work machine and/or a transmission stage of a manual gearbox (66) and/or the state of a power take-off shaft (22) and/or data transmitted via a data bus (88).

5. Control device (70) for a hybrid drive of a work machine, having:
(a) a state-detection device (74) for automatically determining a work cycle which is just carried out by the work machine, and
(b) means for selecting a control parameter of a power or torque distribution controller (72) for controlling the load distribution on an internal combustion engine (40) and an electric motor (62) of a hybrid drive as a function of the work cycle determined by the state-detection device (74),
**characterized in that** the control parameter is a factor of which the respective torque demand or power demand is input in a proportional and/integral fashion into the output value of the power or torque distribution controller (72) which is embodied as a proportional integral controller.

6. Control device (70) according to Claim 5, wherein the state-detection device (74) can be operated to determine the work cycle on the basis of a classification of measured values which are acquired by a sensor, on the basis of a pattern detection by means of a classification algorithm.

7. Control device according to Claim 6, wherein the measured values relate to the speed of the work machine and/or a transmission stage of a manual gearbox (66) and/or the state of a power take-off shaft (22) and/or data transmitted via a data bus (88).

8. Work machine having an internal combustion engine (40), a generator (44) which can be driven by the internal combustion engine (40), a charge accumulator (17), an electric motor (62), a drive train which comprises a summing gear mechanism (60) which has a drive connection to the internal combustion engine (40) and to the electric motor (62), and a control device (70) according to one of Claims 5 to 7.

## Revendications

1. Procédé de détermination d'un paramètre de contrôle d'un régulateur (72) de répartition de la puissance ou du couple de rotation de l'entraînement hybride d'une machine de travail, le procédé présentant les étapes suivantes :
(a) détermination automatique du cycle de travail qui vient d'être exécuté par la machine de travail et
(b) sélection du paramètre de contrôle en fonction du cycle de travail défini à l'étape (a),
**caractérisé en ce que**
le paramètre de contrôle est un facteur par lequel le besoin correspondant en couple de rotation ou en puissance intervient de façon proportionnelle et/ou intégrale dans la valeur de sortie du régulateur (72) de répartition de la puissance ou du couple de rotation configuré comme régulateur proportionnel-intégral.

2. Procédé selon la revendication 1, dans lequel à l'étape (a), le cycle de travail est déterminé à l'aide d'un classement de valeurs de mesure saisies par des capteurs, à l'aide d'une reconnaissance de motifs par un algorithme de classement.

3. Procédé selon la revendication 2, dans lequel l'algorithme de classement utilise un classificateur de Bayes, un classificateur par voisin le plus proche, un classificateur par k voisins les plus proches, des fonctions de distance et/ou des arborescences de décision.

4. Procédé selon les revendications 2 ou 3, dans lequel les valeurs de mesure concernent la vitesse de la machine de travail, le rapport de conversion d'une transmission (66) à plusieurs rapports, l'état d'un arbre de tourillon (22) et/ou des données transmises par un bus (88) de données.

5. Dispositif de commande (70) pour entraînement hybride d'une machine de travail, le dispositif présentant :
(a) un dispositif (74) de saisie d'état qui détermine automatiquement un cycle de travail qui vient d'être réalisé par la machine de travail et
(b) des moyens de sélection d'un paramètre de contrôle d'un régulateur (72) de répartition de la puissance ou du couple de rotation qui régule la répartition de la charge entre un moteur à combustion interne (40) et un moteur électrique (62) de l'entraînement hybride en fonction du cycle de travail défini par le dispositif (74) de saisie d'état, **caractérisé en ce que**
le paramètre de contrôle est un facteur par lequel le besoin correspondant en couple de rotation ou en puissance intervient de façon proportionnelle et/ou intégrale dans la valeur de sortie du régulateur (72) de répartition de la puissance ou du couple de rotation configuré comme régulateur proportionnel-intégral.

6. Dispositif de commande (70) selon la revendication 5, dans lequel le dispositif (74) de saisie d'état peut être conduit de manière à déterminer le cycle de travail à l'aide d'un classement de valeurs de mesure saisies par des capteurs, à l'aide d'une reconnaissance de motifs par un algorithme de classement.

7. Dispositif de commande (70) selon la revendication 6, dans lequel les valeurs de mesure concernent la vitesse de la machine de travail, le rapport de conversion d'une transmission (66) à plusieurs rapports, l'état d'un arbre de tourillon (22) et/ou des données transmises par un bus (88) de données.

8. Machine de travail dotée d'un moteur à combustion interne (40), d'une génératrice (44) qui peut être entraînée par le moteur à combustion interne (40), d'une réserve de charge (78), d'un moteur électrique (62), d'un train d'entraînement comprenant une transmission (60) à addition placée en liaison d'entraînement avec le moteur à combustion interne (40) et le moteur électrique (62) et un dispositif de commande (70) selon l'une des revendications 5 à 7.
